# FASCICULE DE BREVET EUROPEEN

(11) **EP 0 345 127 B1**
(45) Date de publication et mention de la délivrance du brevet: **14.07.1993**
(21) Numéro de dépôt: 89401442.2
(22) Date de dépôt: 26.05.1989
(51) Int. Cl.: B60R 19/18

(54) **Pare-chocs élastiques pour véhicules automobiles**
Nachgiebige Stossstangen für Kraftfahrzeuge
Elastic bumpers for motor vehicles

(30) Priorité: 31.05.1988 FR 8807237
(43) Date de publication de la demande: 06.12.1989
(73) Titulaire: REGIE NATIONALE DES USINES RENAULT, 92109 Boulogne-Billancourt (FR)
(72) Inventeur: Bettray, Guy, F-75015 Paris (FR); Parot, Philippe, F-78380 Bougival (FR)

(56) Documents cités:
- DE-A- 2 127 411
- FR-A- 2 319 515
- FR-A- 2 460 812
- FR-A- 2 570 337
- PATENT ABSTRACTS OF JAPAN, vol. 8, no. 16 (M-270)[1453], 24 janvier 1984, page 114 M 270; & JP-A-58 177 780 (NISSAN JIDOSHA K.K.) 18-10-1983
- PATENT ABSTRACTS OF JAPAN, vol. 11, no. 183 (M-598)[2630], 12 juin 1987, page 94 M 598; & JP-A-62 12 443 (FUJI HAEVY IND. LTD) 21-01-1987
- PATENT ABSTRACTS OF JAPAN, vol. 9, no. 103 (M-377)[1826], 8 mai 1985, page 110 M 377; & JP-A-59 227 538 (NISSAN JIDOSHA K.K.) 20-12-1984

## Description

La présente invention se rapporte à des éléments de protection composite de type pare-chocs pour l'avant et l'arrière de véhicules automobiles selon le préambule de la revendication 1.

Beaucoup de véhicules modernes sont protégés des chocs avant ou arrière par des structures en plastique. Ces structures peuvent, par exemple, résulter de la combinaison suivante :
- une coque extérieure possédant les propriétés esthétiques, aérodynamiques et comportant certains dispositifs comme les feux de signalisation, cataphotes, phares supplémentaires, ouvertures de ventilation, etc...
- un élément de structure alvéolaire permettant d'absorber les chocs par leur déformation progressive. Cet élément assure la liaison entre la coque extérieure et la caisse de la voiture.

La publication FR-A-2 570 337 décrit un tel élément de protection conforme au préambule de la revendication 1. Elle concerne plus particulièrement un pare-chocs qui comprend une paroi externe fixée dans sa partie supérieure à un absorbeur et dans sa partie inférieure à un élément rigide de la structure d'un véhicule. Par suite le rebord supérieur du pare-chocs ne tend pas à se soulever et à s'approcher de l'élément de carrosserie juste au dessus.

Afin d'améliorer l'aspect extérieur des véhicules un jeu réduit et constant sépare le pare-chocs de la caisse ; ce jeu est difficile à respecter, car les plastiques ont un mauvaise stabilité dimensionnelle, et les petits chocs répétés lors de manoeuvres de stationnement occasionnent des contacts et des frottements du pare-chocs sur les parties peintes de la tôle qui s'oxyde.

Ce problème est résolu conformément à la caractéristique de la revendication 1 en référence au dessin annexé dans lequel :

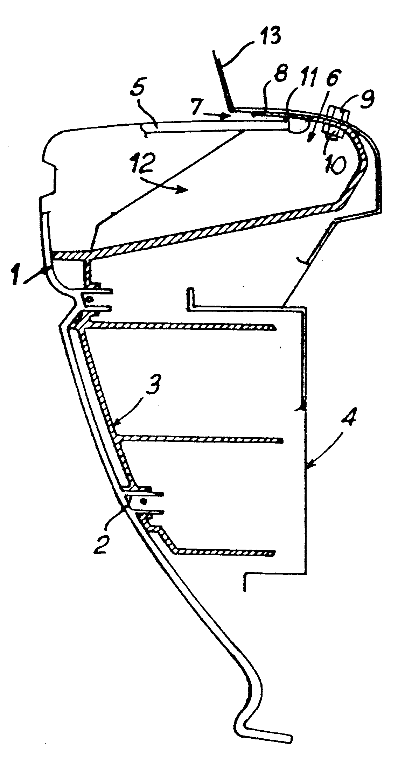

- La figure 1 représente une section transversale d'une structure constituant le pare-chocs.

Suivant ce mode de réalisation, l'élément extérieur ou coque 1 est lié par des moyens connus 2 a un élément absorbeur de chocs 3, qui est lui-même fixé sur la structure de la voiture 4.

Pour des raisons d'esthétique et d'amélioration du coefficient de pénétration dans l'air du véhicule, la partie supérieure 5 de la coque s'engage dans une cavité 6 aménagée dans la carrosserie 13 avec un jeu 7 réduit au minimum.

Une paroi 8, appartenant à l'élément absorbeur de chocs 3 est fixée par des moyens habituels comme des vis 9 et des écrous 10 à la partie supérieure de la cavité 6.

Lorsque le bouclier recule sous la pression d'un choc, la partie supérieure 5 de la coque recule à l'intérieur de la cavité 6 et le bord arrondi 11 de la partie supérieure 5 glisse le long de la paroi 8, sans endommager la peinture de la carrosserie.

Cette paroi 8 présente une pente destinée à éloigner de la carrosserie 13 la partie supérieure 5 de la coque qui risque de se déformer en pénétrant dans la cavité 6.

Des toiles 12 appartenant à l'élément absorbeur de chocs 3 contribuent à améliorer l'aspect du bouclier en appliquant la partie supérieure 5 contre la paroi 8.

## Revendications

1. Elément de protection composite en matière synthétique fixé sur une carrosserie (13), notamment pour l'avant ou l'arrière d'un véhicule automobile comprenant une coque frontale (1) de résistance aux chocs et fixée sur un élément absorbeur de chocs (3), caractérisé par le fait que l'élément absorbeur de chocs (3) est prolongé dans sa partie supérieure arrière par une paroi dirigée vers le haut et formant une paroi de retour (8) en contact avec la partie correspondante de la carrosserie (13) et que ce retour recouvre largement le rebord supérieur (5) de la coque frontale afin de permettre un mouvement relatif de la dite coque (1) par rapport à la carrosserie (13) sans endommager l'aspect de cette dernière.

2. Elément de protection pour véhicule automobile selon la revendication 1, caractérisé par le fait que le rebord supérieur de la coque frontale (5) se termine par un bord arrondi (11).

3. Elément de protection pour véhicule automobile selon la revendication 1, caractérisé par le fait que la face inférieure de la paroi de retour (8) en contact avec la partie correspondante de la carrosserie (13), forme une face de glissement en pente.

4. Elément de protection pour véhicule automobile selon la revendication 1, caractérisé par le fait que la paroi de retour (8) en contact avec la partie correspondante de la carrosserie (13) est fixée à la dite carrosserie par des moyens en soi (9-10).

5. Elément de protection pour véhicule automobile selon la revendication 1, caractérisé par le fait que la face supérieure de l'élément absorbeur de chocs (3) porte un moyen d'appui (12) du bord supérieur (5) de la coque frontale (1) contre la paroi de retour (8).

## Patentansprüche

1. Zusammengesetztes Schutzteil aus Kunststoff, das an einer Karosserie (13) befestigt ist, insbesondere für das Vorderteil oder Rückteil eines Kraftfahrzeuges, mit einer stoßaufnehmenden Vorderschale (1), die an einem stoßabsorbierenden Bauteil (3) befestigt ist, dadurch gekennzeichnet, daß der obere hintere Abschnitt des stoßabsorbierenden Teils (3) durch eine Wand verlängert wird, die nach oben gerichtet ist und eine Umlenkwand (8) bildet, die den entsprechenden Abschnitt der Karosserie berührt und daß diese Umkehrung den größten Teil des oberen Randes (5) der Vorderschale abdeckt, um dergestalt eine Relativbewegung der Schale (1) bezüglich der Karosserie (13) zu ermöglichen, ohne deren Aussehen zu beeinträchtigen.

2. Schutzteil für Kraftfahrzeuge nach Anspruch 1, dadurch gekennzeichnet, daß der obere Rand der Vorderschale (5) in einem abgerundeten Rand (11) endet.

3. Schutzteil für Kraftfahrzeuge nach Anspruch 1, dadurch gekennzeichnet, daß die untere Fläche der Umkehrwand (8), welche den entsprechenden Abschnitt der Karosserie (13) berührt, eine geneigte Gleitfläche bildet.

4. Schutzteil für Kraftfahrzeuge nach Anspruch 1, dadurch gekennzeichnet, daß die den entsprechenden Abschnitt der Karosserie (3) berührende Umkehrwand (8) an der Karosserie mittels einer bekannten Anordnung (9 - 10) befestigt ist.

5. Schutzteil für Kraftfahrzeuge nach Anspruch 1, dadurch gekennzeichnet, daß die obere Fläche des stoßabsorbierenden Bauteils (3) eine Stützanordnung (12) für den oberen Rand (5) der Vorderschale (1) in Richtung der Umkehrwand (8) trägt.

## Claims

1. A composite protection member of synthetic material secured to a bodywork (13), in particular for the front or rear of a motor vehicle, comprising a front impact-resistant shell (1) secured to a shock absorber member (3), characterized in that the rear upper portion of the shock absorber member (3) is prolonged by an upwardly directed wall forming a return wall (8) in contact with the corresponding portion of the bodywork (13) and in that this return substantially covers the upper rim (5) of the front shell in order to allow the shell (1) to move relative to the bodywork (13) without damaging the appearance of the latter.

2. A protection member for a motor vehicle as claimed in claim 1, characterized in that the upper rim of the front shell (5) terminates in a rounded edge (11).

3. A protection member for a motor vehicle as claimed in claim 1, characterized in that the lower surface of the return wall (8) in contact with the corresponding portion of the bodywork (13) forms an inclined sliding surface.

4. A protection member for a motor vehicle as claimed in claim 1, characterized in that the return wall (8) in contact with the corresponding portion of the bodywork (13) is secured to this bodywork by known means (9-10).

5. A protection member for a motor vehicle as claimed in claim 1, characterized in that the upper surface of the shock absorber member (3) bears a means (12) for supporting the upper edge (5) of the front shell (1) against the return wall (8).
